# EUROPÄISCHE PATENTANMELDUNG

(11) **EP 1 323 573 A2**
(43) Veröffentlichungstag der Anmeldung: **02.07.2003**
(21) Anmeldenummer: 02024327.5
(22) Anmeldetag: 02.11.2002
(51) Int. Cl.: B60N 2/48, B60N 2/56

(54) **Kopfstütze für einen Kraftfahrzeugsitz**

(30) Priorität: 21.12.2001 DE 10163050
(71) Anmelder: DaimlerChrysler AG, 70567 Stuttgart (DE)
(72) Erfinder: Bargheer, Claudio, 71088 Holzgerlingen (DE); Pfahler, Karl, Dr., 70180 Stuttgart (DE); Renner, Lothar, 71154 Nufringen (DE)

(57) **Zusammenfassung**

Die Erfindung betrifft eine Kopfstütze für einen Kraftfahrzeugsitz mit einer integrierten Luftversorgungseinrichtung, welche druckseitig eines Gebläses einen Luftauslasskanal mit einer an der Vorderseite der Kopfstütze angeordneten Auslassöffnung zum Versorgen des Kopf- , Nacken und Schulterbereichs des Sitzinsassen mit Warmluft und saugseitig des Gebläses einen Lufteinlasskanal mit einer Einlassöffnung umfasst, wobei der Luftversorgungseinrichtung ein Heizelement zugeordnet ist.
Die Lufteinlassöffnung ist an der Rückseite der Kopfstütze vorgesehen; und das Gebläse ist als zwischen dem Lufteinlass- und dem Luftauslasskanal angeordneter Axiallüfter ausgebildet.

## Beschreibung

Die Erfindung betrifft eine Kopfstütze für einen Kraftfahrzeugsitz nach dem Oberbegriff des Patentanspruchs 1.

Der DE 199 49 935 C1 ist bereits eine Kopfstütze für einen Kraftfahrzeugsitz als bekannt zu entnehmen, in der eine Luftversorgungseinrichtung integriert ist. Diese Luftversorgungseinrichtung umfasst druckseitig eines Radialgebläses einen Luftauslasskanal mit einer Auslassöffnung zum Versorgen des Kopf-, Nacken und Schulterbereichs des Sitzinsassen mit Warmluft, welcher an der Vorderseite der Kopfstütze angeordnet ist. Saugseitig des Gebläses weist die Luftversorgungseinrichtung einen Lufteinlasskanal mit einer Einlassöffnung auf, welche an einer Seite der Kopfstütze mündet. Innerhalb des Lufteinlasskanals ist dabei eine Heizwendel angeordnet, welche zum Erwärmen des Luftstroms dient. Insgesamt nimmt die Luftversorgungseinrichtung einen erheblichen Raum der Kopfstütze in Anspruch.

Der Erfindung liegt daher die Aufgabe zugrunde, eine Kopfstütze der eingangs genannten Art zu schaffen, deren Luftversorgungseinrichtung einen geringeren Bauraum benötigt und einfacher aufgebaut ist.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftwagen nach der Erfindung ist die Lufteinlassöffnung an der Rückseite der Kopfstütze vorgesehen, so dass ein kürzerer Luftweg zwischen der Einlassöffnung und der Auslassöffnung erreicht und die Luftversorgungseinrichtung kompakter und mit einem höheren Wirkungsgrad gestaltet werden kann. Zudem kann durch den kurzen Luftweg das Heizelement kleiner und energiesparender ausgebildet werden. Die Verwendung eines als Axiallüfter gestalteten Gebläses ermöglicht ebenfalls eine kompaktere Bauform der Luftversorgungseinrichtung.

Eine besonders einfache Ausgestaltung der Luftversorgungseinrichtung ist geschaffen, wenn Luftaus- und Lufteinlasskanal als von der Vorderseite bis zur Rückseite der Kopfstütze durchgängiger Rohrkanal ausgebildet sind. Der Rohrkanal kann dabei besonders einfach einstückig ausgebildet sein.

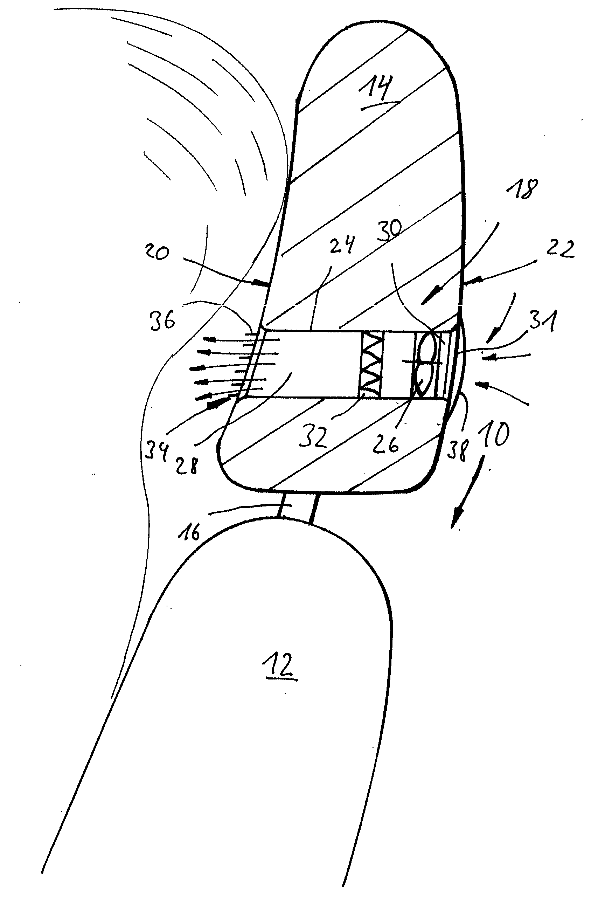

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt
eine schematische Schnittansicht in Fahrzeuglängsrichtung auf die erfindungsgemäße Kopfstütze für einen Kraftfahrzeugsitz mit einer integrierten Luftversorgungseinrichtung zum Versorgen des Kopf-, Nacken und Schulterbereichs des Sitzinsassen mit Warmluft.

In der Figur ist in Schnittansicht in Fahrzeuglängsrichtung der obere Bereich eines Kraftwagensitzes 10 insbesondere für einen offenen Kraftwagen dargestellt. Der Kraftwagensitz 10 umfasst neben einer Rückenlehne 12 eine Kopfstütze 14, welche in üblicher Weise über Führungsstangen 16 höhenverstellbar an der Rückenlehne 12 gehalten ist. In die Kopfstütze 14 ist eine Luftversorgungseinrichtung 18 integriert, welche die Kopfstütze 14 durchsetzt. Die Luftversorgungseinrichtung 18 umfasst einen von der Vorderseite 20 bis zur Rückseite 22 der Kopfstütze 14 durchgängigen Rohrkanal 24, der etwa horizontal in Fahrzeuglängsrichtung und in einem unteren Bereich der Kopfstütze 14 verläuft. Der Rohrkanal 24 ist vorzugsweise aus einem weichen Kunststoff oder aus Gummi hergestellt. Ein hinterer Teil des Rohrkanals 24 bildet dabei einen saugseitig eines - als Axiallüfter 26 ausgebildeten - Gebläses angeordneten Lufteinlasskanal 30. Der Lufteinlasskanal 30 weist dabei eine Lufteinlassöffnung 31 auf, die an der Rückseite 22 der Kopfstütze 14 vorgesehen ist. Der vordere Teil des Rohrkanals 24 dient als druckseitig des Gebläses 26 angeordneter Luftauslasskanal 28. Der Axiallüfter 26 befindet sich nahe der Rückseite 22 der Kopfstütze 14, damit der Sitzinsasse nicht von den Lüftergeräuschen und Vibrationen belästigt wird. Etwa in der Mitte innerhalb des Rohrkanals 24 ist ein Heizelement 32 angeordnet, welches zum Erwärmen des aus dem Lüfter 26 in Richtung des Sitzinsassen austretenden Luftstroms vorgesehen ist. Zum Einstellen der Temperatur und Intensität des Luftstroms sind der Lüfter 26 und/oder das Heizelement 32 einstellbar. An der Vorderseite 20 der Kopfstütze 14 tritt der Luftstrom über wenigstens eine Auslassöffnung 34 des Luftauslasskanals 30 zum Versorgen des Kopf-, Nacken und Schulterbereichs des Sitzinsassen mit Warmluft aus. Um die Warmluft optimal an die gewünschte Körperstelle des Sitzinsassen zu leiten, ist im Bereich der Auslassöffnung 34 des Luftauslasskanals 28 eine Luftleiteinrichtung mit einer Mehrzahl von einstellbaren Luftleitschaufeln 36 angeordnet. Vor der Lufteinlassöffnung 31 kann ein Gitter 38 oder dgl. Sichtblende angeordnet sein.

## Patentansprüche

1. Kopfstütze für einen Kraftfahrzeugsitz mit einer integrierten Luftversorgungseinrichtung (18), welche druckseitig eines Gebläses (26) einen Luftauslasskanal (28) mit einer an der Vorderseite (20) der Kopfstütze (14) angeordneten Auslassöffnung (34) zum Versorgen des Kopf-, Nacken und Schulterbereichs des Sitzinsassen mit Warmluft und saugseitig des Gebläses (26) einen Lufteinlasskanal (30) mit einer Einlassöffnung (31) umfasst, wobei der Luftversorgungseinrichtung (18) ein Heizelement (32) zugeordnet ist,
**dadurch gekennzeichnet,**
**dass** die Einlassöffnung (31) an der Rückseite (22) der Kopfstütze (14) vorgesehen ist; und
**dass** das Gebläse (26) als zwischen dem Lufteinlass- und dem Luftauslasskanal (28,30) angeordneter Axiallüfter ausgebildet ist.

2. Kopfstütze nach Anspruch 1,
**dadurch gekennzeichnet,**
**dass** der Luftauslasskanal (28) und der Lufteinlasskanal (30) zumindest annähernd auf einer Höhe angeordnet sind.

3. Kopfstütze nach Anspruch 2,
**dadurch gekennzeichnet,**
**dass** der Luftauslasskanal (28) und der Lufteinlasskanal (30) als von der Vorderseite (20) bis zur Rückseite (22) der Kopfstütze (14) durchgängiger Rohrkanal (24) ausgebildet ist.

4. Kopfstütze nach Anspruch 3,
**dadurch gekennzeichnet,**
**dass** der Rohrkanal (24) im unteren Bereich der Kopfstütze (14) in Fahrzeuglängsrichtung verläuft.

5. Kopfstütze nach Anspruch 2 oder 3,
**dadurch gekennzeichnet,**
**dass** der Luftauslasskanal (28) und der Lufteinlasskanal (30) einstückig ausgebildet sind.

6. Kopfstütze nach Anspruch 1,
**dadurch gekennzeichnet,**
**dass** das Heizelement (32) dem Axiallüfter (26) nachgeschaltet ist.

7. Kopfstütze nach Anspruch 1,
**dadurch gekennzeichnet,**
**dass** der Axiallüfter (26) nahe der Einlassöffnung (31) des Lufteinlasskanals (30) angeordnet ist.

8. Kopfstütze nach Anspruch 1,
**dadurch gekennzeichnet,**
**dass** im Bereich der Auslassöffnung (34) des Luftauslasskanals (28) eine Luftleiteinrichtung vorgesehen ist, welche eine Mehrzahl von einstellbaren Luftleitschaufeln (36) umfasst.
